# EUROPEAN PATENT APPLICATION

(11) **EP 4 401 020 A1**
(43) Date of publication of application: **17.07.2024**
(21) Application number: 24151524.6
(22) Date of filing: 12.01.2024
(51) Int. Cl.: G06Q 10/08, G06Q 10/00, G06V 20/20

(54) **SYSTEM AND METHOD FOR PERFORMING QUALITY ASSURANCE OF DIFFERENT MANUFACTURING PRODUCTS**

(30) Priority: 12.01.2023 IN 202311002609
(71) Applicant: Massey, Dicky, 110034 Delhi (India) (IN)
(72) Inventor: Massey, Dicky, 110034 Delhi (India) (IN)
(74) Representative: Ungria López, Javier

(57) **Abstract**

The present invention discloses a system (100A) and a method (300) for performing quality assurance of the packaged goods or the different manufacturing products. The system (100A) comprises of a user device (104), a setup device (106), an application module (108) having an inbuilt cloud network model, Mixed Reality (MR) glasses (110) with an inbuilt AI camera (112). The setup device (106) is a device which is configured to be setup and used by an admin user, to guide a designated user (102) in performing quality assurance of the packaged goods or the different manufacturing products placed in a carton. The setup device (106) is communicably coupled with the user device (104), to guide the designated user (102), by giving instructions related to performing of the quality assurance of the packaged goods or the different manufacturing products.

## Description

### CROSS REFERENCE TO RELATED APPLICATIONS

This application claims priority to Indian Patent Application No. 202311002609, filed with the Indian Patent Office on January 12, 2023, and entitled "SYSTEM AND METHOD FOR PERFORMING QUALITY INSPECTION OF DIFFERENT MANUFACTURING PRODUCTS", which is incorporated herein by reference in its entirety.

### TECHNICAL FIELD

This application relates to remote quality assurance systems and methods, and in particular, to a system and method for performing quality assurance (QA) of different manufacturing products. The application further, in more particular, relates to the system and method for performing the quality assurance of the different manufacturing products, through use of Mixed Reality (MR) technology driven by Artificial Intelligence (Al).

### BACKGROUND

On-site factory inspections primarily focus on monitoring the manufacturing process and testing the physical condition of the resulting products for compliance with the client's requirements. In addition, they ensure that the products are properly packaged and correctly loaded for shipping and customs inspection at the destination. Pre-product inspections are carried out before production begins and up until 20% of production has been completed. Inspections of the factory by impartial third-party quality control inspectors help clarify production requirements and specifications, and firmly establish whether the manufacturer will be able to deliver on the promise to produce a quality product using the correct materials and manufacturing process. The primary key requirement during the quality inspection of the product is to inspect the first item to come off the production line at the factory. This is the first and last chance to physically inspect the final product and spot any defects so corrections can be made ahead of mass production. This inspection assesses whether the final product meets all the engineering, design, and specification requirements. The results are documented and sent to the client for verification.

Currently, carrying out and managing quality inspection of different manufacturing products have become a challenge for several reasons. There have been many remote quality inspection systems and methods developed in the recent past for carrying out the effective quality inspection of the different manufacturing products. One example of the remote quality inspection systems is use of tools with some sort of lens, potentially a light source, and either a viewing eyepiece or video transmission software so that the machine or site being examined can be viewed from a distance. These tools can have simple or rather complex designs, using technology like fibre optics or Web Real Time Communication (WebRTC).

Another example of the remote quality inspection systems is use of various types of equipment including borescopes, with or without video, visual support solutions, fibrescopes, remotely operated pan-tilt-zoom (PTZ) cameras, robotic cameras or tools, drones, and other data monitoring software, which allow technicians to analyze and visualize status of machines or products.

However, the existing remote quality inspection systems as described above are complex in terms of operation and design, and are not able to carry out quality inspection of the different manufacturing products in an effective manner. Moreover, these existing remote quality inspection systems involve use of the software which is not able to effectively handle quality inspection of the different manufacturing products at the same time remotely. Therefore, there exists a need of a remote inspection system and method which is configured to perform the quality inspection of the different manufacturing products in an effective manner, thereby providing accurate and quality inspection results.

### SUMMARY

Embodiments of this application provide a system and method for performing quality assurance (QA) of different manufacturing products, to implement seamless transition of effectively handling quality inspection of the different manufacturing products at the same time remotely and improve QA experience for the users performing the QA of the different manufacturing products.

In view of this, a first aspect of this application provides a system for performing quality assurance of different manufacturing products in an effective manner, thereby leading to precise and improved quality assurance (QA) outputs. The system mainly comprises a user device, a setup device, and an application module. The setup device is configured to be connected to the user device through a cloud network model. The application module is communicably coupled to the user device and the setup device and configured for uploading, through the setup device, a picture order (PO) sheet associated with at least one packaged good or manufacturing product to be inspected at an inspection location facility. The application module is further configured for receiving, through Mixed Reality (MR) glasses, the picture order sheet by a designated user. The application module is further configured for capturing, through an AI camera, images of the at least one packaged good or manufacturing product to be inspected from the picture order sheet. The application module is further configured for performing, through an AI module, running of cloud functions of the cloud network model by the designated user on the captured images, to determine image characteristics of the at least one packaged good or manufacturing product. The application module is further configured for comparing, through the AI module, the image characteristics of the at least one packaged good or manufacturing product with image of the at least one packaged good or manufacturing product in the uploaded PO sheet. The application module is further configured for detecting, through the AI module, defects in the packaged goods or manufacturing products, based on comparison of the determined image characteristics of the at least one packaged good or manufacturing product with the image of the at least one packaged good or manufacturing product in the uploaded PO sheet. The application module is further configured for generating, through a report generation module, a quality assurance report based on the detected defects in the at least one packaged good or manufacturing product. The application module is further configured for determining, through a QA analysis module, a plurality of scores or grades associated with the at least one packaged good or manufacturing product, based on the generated QA report.

In view of above aforementioned system, a second aspect of this application provides a method for performing quality assurance of different manufacturing products in an effective manner, thereby leading to precise and improved quality assurance (QA) outputs. The method comprises initially uploading, through a setup device, a picture order (PO) sheet associated with at least one packaged good or manufacturing product to be inspected at an inspection location facility, as a first step. The method further comprises receiving, through the MR glasses, the picture order sheet by a designated user, as a second step. The method further comprises capturing, through an AI camera, images of the at least one packaged good or manufacturing product to be inspected from the picture order sheet, as a third step. The method further comprises performing, through an AI module, running of cloud functions of the cloud network model by the designated user on the captured images, to determine image characteristics of the at least one packaged good or manufacturing product, as a fourth step. The method further comprises comparing, through the AI module, the image characteristics of the at least one packaged good or manufacturing product with image of the at least one packaged good or manufacturing product in the uploaded PO sheet, as a fifth step. The method further comprises detecting, through the Al module, defects in the packaged goods or manufacturing products, based on comparison of the determined image characteristics of the at least one packaged good or manufacturing product with the image of the at least one packaged good or manufacturing product in the uploaded PO sheet, as a sixth step. The method further comprises generating, through a report generation module, a quality assurance report based on the detected defects in the at least one packaged good or manufacturing product, as a seventh step. The method further comprises determining, through a QA analysis module , a plurality of scores or grades associated with the at least one packaged good or manufacturing product, based on the generated QA report, as an eight and last step.

### BRIEF DESCRIPTION OF DRAWINGS

To describe the technical solutions in the embodiments of this application more clearly, the following briefly describes the accompanying drawings required for describing the embodiments. Definitely, the accompanying drawings described below show merely some embodiments of this application.
FIG. 1A is a block diagram illustrating a system for performing quality assurance of packaged goods or different manufacturing products, according to one embodiment;
FIG. 1B is a block diagram illustrating a system for performing the quality assurance of the packaged goods or the different manufacturing products, according to another embodiment;
FIG. 1C is a block diagram of a system illustrating components of a report generation module, according to one embodiment;
FIG. 1D is a block diagram of a system illustrating events performed by an AI manager module, according to another embodiment;
FIG. 1E is a block diagram of a system illustrating components of an AI core module, according to yet another embodiment;
FIG. 2A is an example diagram illustrating operation of a system for performing quality assurance of the packaged goods or the manufactured products, according to one embodiment;
FIG. 2B is an example diagram illustrating a system having a software application running on a mobile device, according to another embodiment;
FIG. 3 is a flowchart illustrating a method for performing the quality assurance of the packaged goods or the manufactured products, according to an embodiment;
FIG. 4 is a pictorial representation of an application window illustrating verification procedure for the designated user, according to a first embodiment;
FIG. 5 is a pictorial representation of an application window illustrating the verification procedure for the designated user, according to a second embodiment;
FIG. 6 is a pictorial representation of an application window illustrating QA test statistics, according to a third embodiment;
FIG. 7 is a pictorial representation of an application window illustrating products page and order registration page, according to a fourth embodiment;
FIG. 8 is a pictorial representation of an application window illustrating the product details, according to a fifth embodiment;
FIG. 9 is a pictorial representation of an application window illustrating the product details, according to a sixth embodiment;
FIG. 10 is a pictorial representation of an application window illustrating carton details, according to a seventh embodiment;
FIG. 11 is a pictorial representation of an application window illustrating a new order registration, according to an eighth embodiment;
FIG. 12 is a pictorial representation of an application window illustrating scheduled tests and completed tests, according to a ninth embodiment;
FIG. 13 is a pictorial representation of an application window illustrating device information, according to a tenth embodiment;
FIG. 14 is a pictorial representation of an application window illustrating registration details of the designated user, according to an eleventh embodiment;
FIG. 15 is a pictorial representation of an application window illustrating scheduled QA tests and completed QA tests, according to a twelfth embodiment;
FIG. 16 is a pictorial representation of an application window illustrating test registration details, according to a thirteenth embodiment;
FIG. 17 is a pictorial representation of an application window illustrating a QA report with status of different QA tests displayed, according to a fourteenth embodiment;
FIG. 18 is a pictorial representation of an application window illustrating upcoming QA tests along with displayed notifications, according to a fifteenth embodiment; and
FIG. 19 is a pictorial representation of a QA report illustrating inspection details and AI analysis test scores, according to an embodiment.

### DESCRIPTION OF EMBODIMENTS

The following clearly and completely describes the technical solutions in the embodiments of this application with reference to the accompanying drawings in the embodiments of this application. Definitely, the described embodiments are merely some but not all of the embodiments of this application.

In the specification, the claims, and the accompanying drawings of this application, the terms "first", "second", "third", "fourth", and the like (if any) are intended to distinguish between similar objects but do not necessarily indicate any specific order or sequence. It should be understood that the data used in such a way is interchangeable in proper circumstances, so that the embodiments of this application described herein can be implemented in an order different from the order illustrated or described herein. Moreover, the terms "include", "have", and any other variants thereof are intended to cover non-exclusive inclusion. For example, a process, a method, a system, a product, or a device that includes a series of steps or units is not necessarily limited to those expressly listed steps or units, but may include another step or unit that is not expressly listed or that is inherent to the process, the method, the product, or the device.

The embodiments of this application provide seamless transition of effective handling of quality assurance of the different manufacturing products at the same time remotely and improve QA experience for the users performing the QA of the different manufacturing products.

It should be understood that the system and the method of the present invention in the embodiments of this application may be applied to various communications systems, such as a global system for mobile communications (GSM, Global System of Mobile communication), a code division multiple access (CDMA, Code Division Multiple Access) system, a wideband code division multiple access (WCDMA, Wideband Code Division Multiple Access) system, general packet radio service (GPRS, General Packet Radio Service), a long term evolution (LTE, Long Term Evolution) system, an LTE frequency division duplex (FDD, Frequency Division Duplex) system, an LTE time division duplex (TDD, Time Division Duplex) system, a universal mobile telecommunications system (UMTS, Universal Mobile Telecommunication System), a worldwide interoperability for microwave access (WiMAX, Worldwide Interoperability for Microwave Access) communications system, a 5th generation (5G, 5th-Generation) mobile communications system, or a future evolved mobile communications system.

It should be understood that, in the embodiments of this application, user device and setup device include but is not limited to a mobile station (MS, Mobile Station), a mobile terminal (Mobile Terminal), a mobile telephone (Mobile Telephone), a handset (handset), portable equipment (portable equipment), and the like. The user equipment may communicate with one or more core networks by using a radio access network (RAN, Radio Access Network). For example, the user device and the setup device may be a mobile telephone (also referred to as a "cellular" telephone), or a computer having a wireless communication function. Alternatively, the user device and the setup device maybe a portable, pocket-sized, handheld, computer built-in, or in-vehicle mobile apparatus.

To facilitate understanding of the embodiments of this application, the following describes the technical terms used in the embodiments of this application.

The user device is the device used by a designated user for carrying out quality assurance of the packaged goods or the different manufacturing products. The user device is configured to enable the designated user to run the application module. The designated user or users are the ones who register themselves through the application module, by inputting their details to purchase product. The designated user is the user responsible to carry out the QI of the packaged goods or the different manufacturing products.

The setup device is the device used by an admin user to connect with the designated user. The setup device is configured to be connected to the user device through a cloud network model. The setup device is further configured to enable the admin user to run the application module. The setup device is further configured to enable the admin user to notify the designated user for carrying out quality assurance (QA) of the packaged goods or the different manufacturing products. The setup device is further configured to enable the admin user to pass instructions to the designated user through the application module, while the designated user is carrying out the QA of the packaged goods or the different manufacturing products.

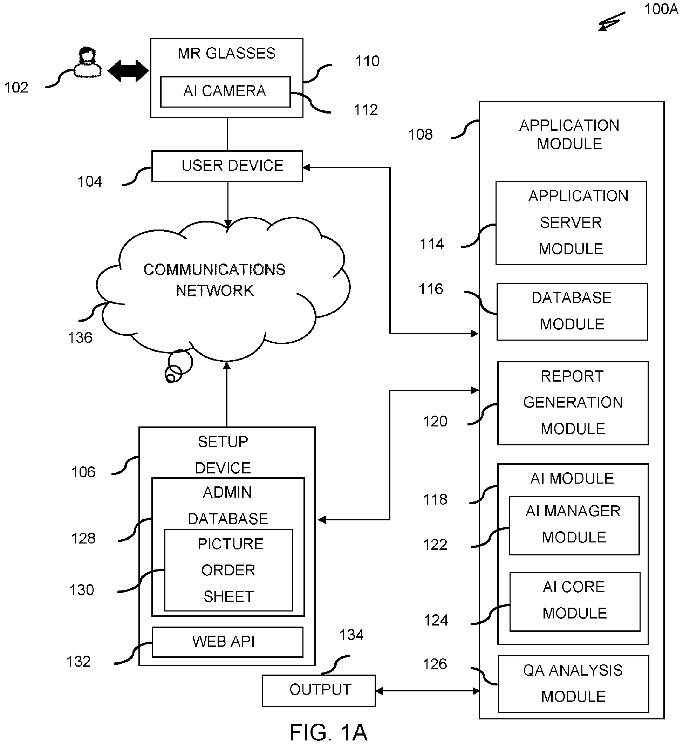

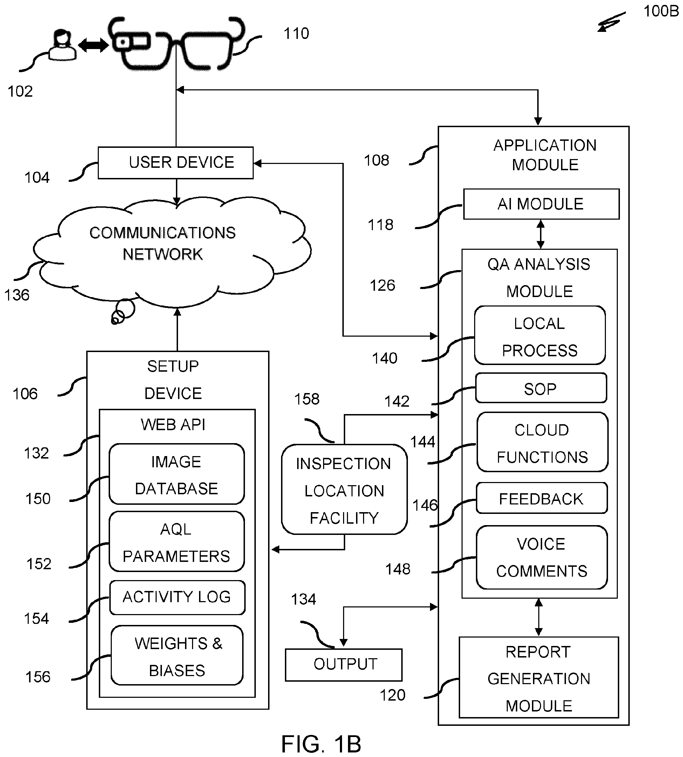

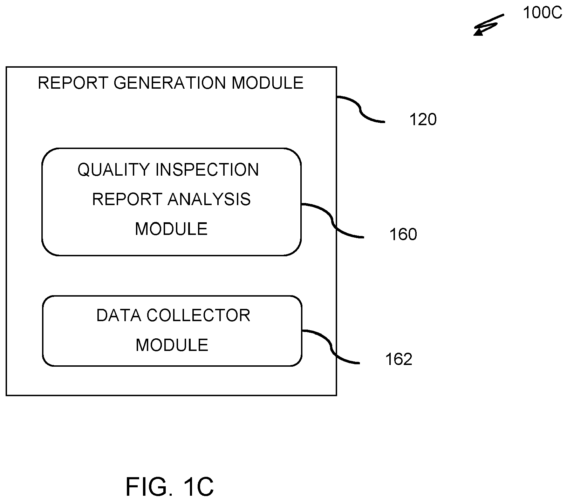

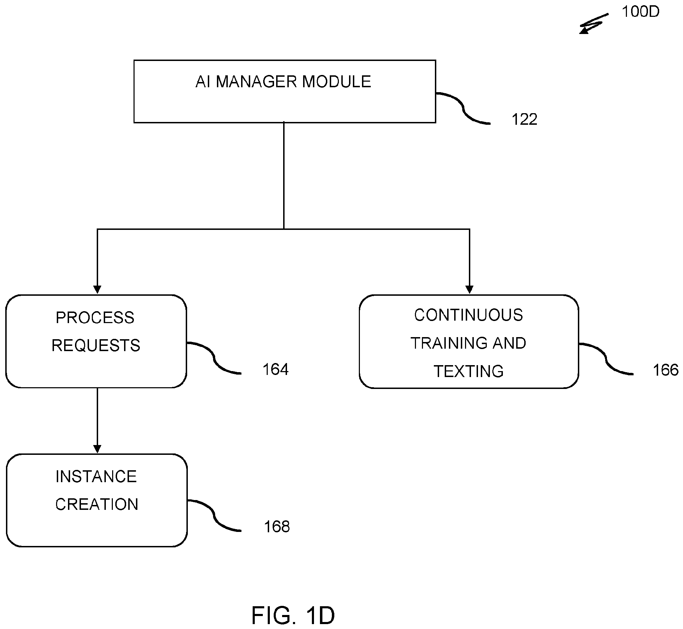

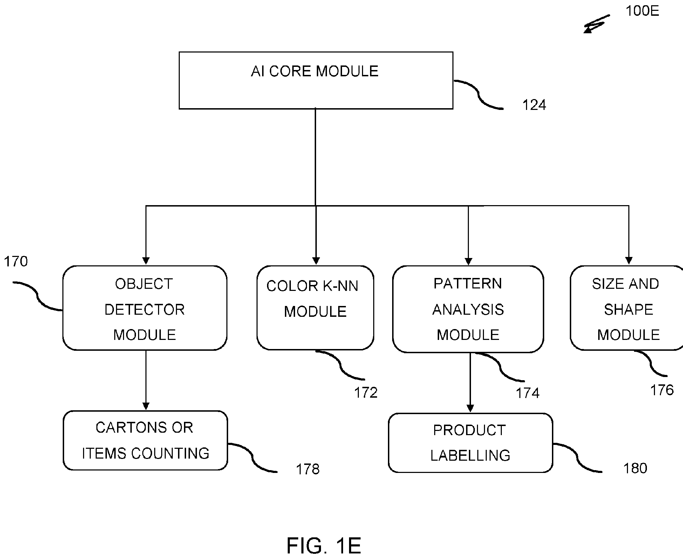

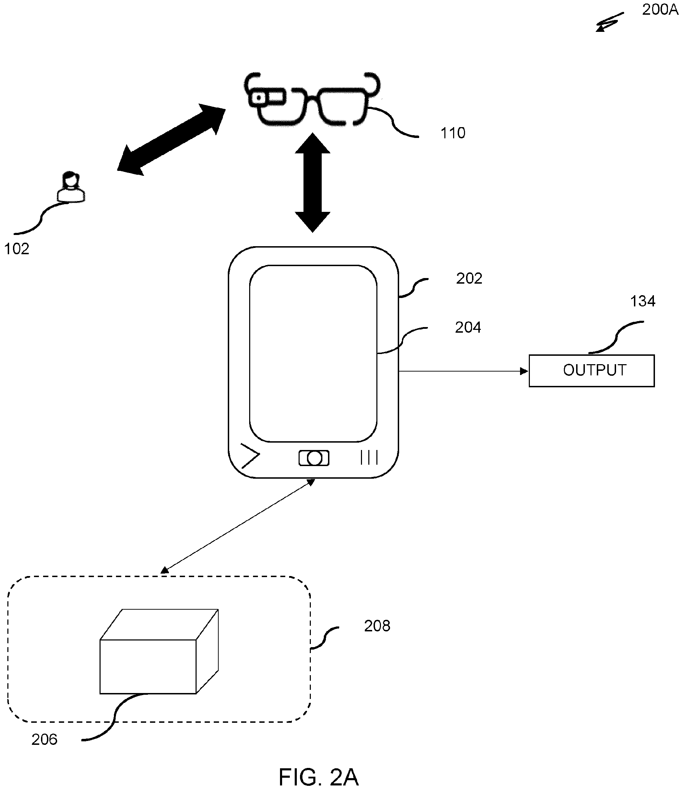

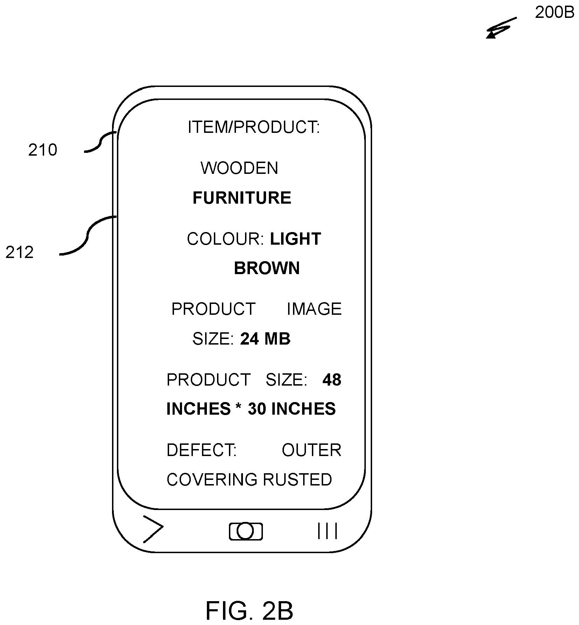

The following first embodiment describes the system in the embodiments of this application. Referring to FIG. 1, an embodiment of the system in the embodiments of this application is included which comprises: a user device (104), a setup device (106), and an application module (108). the setup device (106) is configured to upload, through the application module (108), a picture order (PO) sheet (130) associated with at least one packaged good or manufacturing product to be inspected at an inspection location facility (shown in FIG. 2). The picture order sheet (130) comprises of a list of packaged goods or manufactured products received by the admin user for inspection, a list of packaged goods or manufactured products which have been already inspected by the designated user (102), and a list of packaged goods or manufacturing products in the carton to be picked up by the designated user (102) for inspection.

In yet another embodiment, the setup device (106) is communicably coupled with the user device (104) to guide the designated user (102), by giving instructions related with performing of the quality assurance of the packaged goods or manufacturing products.

The setup device (106) further comprises of an admin database (128) and a web application program interface (API) (132). The admin database (128) is configured to store data records related with the list of packaged goods or manufactured products received by the admin user for inspection, the list of packaged goods or manufactured products which have been already inspected by the designated user (102), and the list of packaged goods or manufacturing products in the carton to be picked up by the designated user (102) for testing.

The application module (108) refers to the application installed and run in the user device (104) by the designated user (102), and in the setup device (106) by the admin user. The application module (108) is configured to be communicably coupled to the user device (104) and the setup device (106). The application module (108) is further configured for uploading, through the setup device (106), the picture order (PO) sheet (130) associated with at least one packaged good or manufacturing product to be inspected at the inspection location facility. The application module (108) is further configured for receiving, through Mixed Reality (MR) glasses (110), the picture order sheet (130) by the designated user (102). The application module (108) is further configured for capturing, through an AI camera (112), images of the at least one packaged good or manufacturing product to be inspected from the picture order sheet (130). The application module (108) is further configured for performing, through an AI module (118), running of cloud functions of the cloud network model by the designated user (102) on the captured images, to determine image characteristics of the at least one packaged good or manufacturing product. The application module (108) is further configured for comparing, through the AI module (118) the image characteristics of the at least one packaged good or manufacturing product with image of the at least one packaged good or manufacturing product in the uploaded PO sheet (130). The application module (108) is further configured for detecting, through the AI module (118), defects in the packaged goods or manufacturing products, based on comparison of the determined image characteristics of the at least one packaged good or manufacturing product with the image of the at least one packaged good or manufacturing product in the uploaded PO sheet (130). The application module (108) is further configured for generating, through a report generation module (120), a quality assurance report based on the detected defects in the at least one packaged good or manufacturing product. The application module (108) is further configured for determining, through a QA analysis module (126), a plurality of scores or grades associated with the at least one packaged good or manufacturing product, based on the generated QA report.

In an embodiment, the image characteristics of the packaged goods or manufacturing products are, but not limited to, colour, shape, size, pattern, and product labelling associated with the one or more packaged goods or manufacturing products.

In another embodiment, the application module (108) mainly comprises of an application server module (114), a database module (116), the AI module (118), the report generation module (120), and the QA analysis module (126).

In yet another embodiment, the application module (108) is further configured to detect location of the designated user (102) and time at which the designated user (102) initiates the QA, while the designated user (102) logs in through the application module (108) to carry out the QA of the packaged goods or manufacturing products.

The system (100A) of FIG. 1 comprises the MR glasses or MR headset (110) having the in-built AI camera (112). The MR glasses (110) are configured to be worn by the designated user (102) to see through packaged goods or manufacturing products clearly. The MR glasses (110) are further configured to enable the designated user (102) randomly select any packaged good or manufacturing product from catalogue or scheduled tests option in the application module (108). The AI camera (112) is configured to capture images of the at least one packaged good or manufacturing product to be inspected.

The application server module (114) is configured to process request made by the designated user (102) to connect with the admin user for carrying out the QA. The application server module (114) is further configured to process request made by the admin user to upload the picture order sheet (130), through the application module (108). The application server module (114) is further configured to process request related to the inspection of the at least one packaged good or manufacturing product selected from the picture order sheet (130). The application server module (114) is further configured to process request related to receiving of the picture order sheet (130) by the designated user (102) on the user device (104) from the setup device (106). The application server module (114) is further configured to process request made by the designated user (102) for selection of the at least one packaged good or manufacturing product to be inspected from a list of different manufacturing products.

The database module (116) is configured to store the picture order sheet (130) uploaded by the admin user and received by the designated user (102), through the application module (108). The database module (116) is further configured to store data related with the list of packaged goods or manufactured products received by the admin user for inspection. The database module (116) is further configured to store data related with the list of packaged goods or manufactured products which have been already inspected by the designated user (102). The database module (116) is further configured to store data related with the list of packaged goods or manufacturing products in the carton to be picked up by the designated user (102) for inspection.

The AI module (118) is configured to enable the designated user (102) to run the cloud functions of the cloud network model on the captured images, to determine image characteristics of the at least one packaged good or manufacturing product. The AI module (118) is further configured to compare the image characteristics of the at least one packaged good or manufacturing product with image of the at least one packaged good or manufacturing product in the uploaded PO sheet (130). The AI module (108) is further configured to detect defects in the packaged goods or manufacturing products, based on comparison of the determined image characteristics of the at least one packaged good or manufacturing product with the image of the at least one packaged good or manufacturing product in the uploaded PO sheet (130).

In one embodiment, the AI module (118) further comprises an AI manager module (122) and an AI core module (124).

The report generation module (120) is configured for generating the quality assurance report based on the detected defects in the at least one packaged good or manufacturing product as an output (134).

The QA analysis module (126) is configured to determine a plurality of scores or grades associated with the at least one packaged good or manufacturing product, based on the generated QA report.

The user device (104), the setup device (106), the application module (108), and the MR glasses (110) are connected to each other over a communications network (136).

In one embodiment, the communications network (136) may facilitate a communication link among the components of the system (100A). It can be noted that the communication network (136) may be a wired and/or a wireless network. The communication network (136), if wireless, may be implemented using communication techniques such as Visible Light Communication (VLC), Worldwide Interoperability for Microwave Access (WiMAX), Long Term Evolution (LTE), Wireless Local Area Network (WLAN), Infrared (IR) communication, Public Switched Telephone Network (PSTN), Radio waves, and other communication techniques, known in the art.

FIG. 1B is a block diagram illustrating a system (100B) for performing the quality assurance of the packaged goods or the different manufacturing products, according to another embodiment. The system (100B) comprises of the user device (104), the setup device (106), the application module (108), and the MR glasses (110) connected to each other over the communications network (136). The application module (108) is communicably coupled to the user device (104) and the setup device (106) and configured for uploading, through the setup device (106), the picture order (PO) sheet (130) associated with at least one packaged good or manufacturing product to be inspected at an inspection location facility (158). The setup device (106) comprises the web API (132). The application module (108) further comprises the AI module (118), the report generation module (120), and the QA analysis module (126). The QA analysis module (126) is configured to analyze the QA process, by enabling the designated user (102) to carry out the quality assurance of the packaged goods or manufacturing products, by providing different control options to the designated user (102). These different control options are, but not limited to, a local process (140), a standard operating procedure SOP (142), cloud functions (144), a feedback (146), and voice comments (148).

In an embodiment, the user device (104) may be configured to run through a voice command module, to take instructions from the admin user and enable the designated user (102) to provide the voice comments (148) to be incorporated in the quality assurance report.

The web API (132) is configured to enable the administrator to select different options for controlling process of the quality assurance to be performed by the designated user (102). The different options for selection provided by the web API (132) are an image database option (150), Acceptable Quality Limit (AQL) parameters option (152), activity log option (154), and weights and biases option (156).

The inspection location facility (158) is the location where the process of QA is carried out by the designated user (102). At the inspection location facility (158), the designated user starts the inspection of the different packaged goods, or the manufacturing products provided by the admin user in the picture order list or the picture order sheet (130).

In an embodiment, the application module (108) comprises of a live QA feature, through which the administrator or the admin user goes live with the QA, and passes instructions to the designated user (102) for performing the QA of the packaged goods or the manufacturing products.

FIG. 1C is a block diagram of a system (100C) illustrating components of the report generation module (120), according to one embodiment. The report generation module (120) further comprises a quality inspection report analysis module (160) and a data collector module (162). The quality inspection report analysis module (160) is configured to analyze the quality assurance report by comparing it with the image of the at least one packaged good or the manufacturing product to exactly detect the and spot out the defects in the at least one packaged good or the manufacturing product. The quality inspection report analysis module (160) is further configured to provide detailed analysis of the quality assurance report, based on the detected defects in the at least one packaged good or manufacturing product. The quality inspection report analysis module (160) is further configured to provide accurate quality assurance results for the at least one packaged good or the manufacturing product, based on the detected defects in the at least one packaged good or manufacturing product.

The data collector module (162) is configured to collect data related with the list of packaged goods or manufactured products received by the admin user for inspection. The data collector module (162) is further configured to collect data related with the list of packaged goods or manufactured products which have been already inspected by the designated user (102). The data collector module (162) is further configured to collect data related with the list of packaged goods or manufacturing products in the carton to be picked up by the designated user (102) for inspection.

FIG. 1D is a block diagram of a system (100D) illustrating events performed by the Al manager module (122), according to another embodiment. These events are process requests (164), continuous training and texting (166), and instance creation (168). The process requests (164) refers to the processing of the different requests made by the designated user (102) and the admin user. The process requests (164) may refer to the requests made by the designated user or users to connect with the admin user for carrying out the QA. The process requests (164) may refer to the requests made by the admin user to upload the picture order sheet (130), through the application module (108). The process requests (164) may refer to the requests made by the admin user to receive the picture order sheet (130) by the designated user (102). The process requests (164) may refer to the requests made by the designated user (102) for selection of the at least one packaged good or manufacturing product to be inspected from a list of different manufacturing products.

The continuous training and texting (166) may refer to the event of continuously training the application module (108) by the AI manager module (122), to provide data related to updated QA results after carrying out QI of the at least one packaged good or the manufacturing product. The continuous training and texting (166) may refer to the event of continuously training the application module (108) by the AI manager module (122), in a way such that the information related to the list of packaged goods to be inspected, the list of packaged goods which have been already inspected, and the list of packaged goods which needs to be picked up for inspection is provided to the designated user (102) through text or notifications.

FIG. 1E is a block diagram of a system (100E) illustrating components of the AI core module (124), according to yet another embodiment. The AI core module (124) comprises of an object detector module (170), a colour K-NN module (172), a pattern analysis module (174), and a size and shape module (176). The object detector module (170) is configured to detect the object or the item or any manufacturing product or packaged good. The object detector module (170) is further configured to detect cartons or item counting. The object detector module (170) may be configured to detect total number of items or the packaged goods or the manufacturing products in a single carton or multiple cartons.

The colour K-NN module (172) is configured to detect the colour of different items or the packaged goods or the manufacturing products. The colour K-NN module is further configured to detect variation in the colour of the different items or the packaged goods or the manufacturing products, based on the comparison of the determined image characteristics of the at least one packaged good or manufacturing product with the image of the at least one packaged good or manufacturing product in the uploaded PO sheet (130).

The pattern analysis module (174) is configured to detect the label of the at least one item or the packaged good or the manufacturing product. The pattern analysis module (174) is further configured to detect the brand of the at least one item or the packaged good or the manufacturing product, based on the labelling of the at least one item or the packaged good or the manufacturing product.

The size and shape module (176) is configured to detect the size and shape of the at least one item or the packaged good or the manufacturing product. The size and shape module (176) is further configured to detect the size and shape of the at least one item or the packaged good or the manufacturing product, based on the labelling of the at least one item or the packaged good or the manufacturing product.

FIG. 2A is an example diagram illustrating operation of a system (200A) for performing quality assurance of the packaged goods or the manufactured products, according to one embodiment. The system (200A) comprises of the user device (202), a software application window (204), a packaged good (206), and a quality inspection facility (208). The packaged good (206) is configured to be scanned by the MR glasses (110), to get different images of the packaged good (206). These different images obtained are blend of Augmented Reality (AR) based images and Virtual Reality (VR) based images. The software application window (204) is configured to display scanned images of the packaged good (206), as well as image characteristics of the packaged good (206). The image characteristics of the packaged good (206) are determined by the AI module (118) in-built in the application module (108). Based on these image characteristics of the packaged good (206) in the quality inspection facility (208), the designated user (102) carries out the quality assurance of the packaged good (206) by inspecting the packaged good (206) in the QI facility (208). The AI module (118) is further configured to automatically count the items or the products in the carton or items contained for that particular product order.

In another embodiment, the software application window (122) is configured to display various different control options to the designated user (102) to perform the QI effectively for the packaged goods or the different manufacturing products. These various control options are configured to enable the user or the users (102) to select any packaged good or the manufacturing product of their choice, for which the QI needs to be carried out, to give the output (118).

In yet another embodiment, the output (134) is the QI report generated based on the detected defects in the manufacturing product or the products or the packaged goods.

FIG. 2B is an example diagram illustrating a system (200B) having a software application running on a mobile device, according to another embodiment. The software application (210) is basically the AR software web-based application operating on the cloud-based infrastructure. The software application (210) is configured to enable the designated user (102) or the buyer to register and access through the software application (210) using his or her log in credentials. The admin user sets up the setup device (106) in communication with the software application (210) running in the user device (104) to guide the user to use the software application (210), while performing the quality assurance of the different manufacturing products by the designated user (102) or the buyer.

In one embodiment, the software application window (212) is configured to display through display interface of the mobile device, the image characteristics of at least one packaged good or at least one manufacturing product. The image characteristics demonstrates the characteristics like the name of the at least one manufacturing product, the size of the at least one manufacturing product, the colour of the at least one manufacturing product, and various other characteristics.

The software application (210) is composed of two components: one is the voice commander and another one is voice-controlled activity. The voice commander are the service interfaces directly in communication with raw Vuzix speech to initialize and maintain voice command. The voice commander comprises of specific defined commands to listen for like "SCAN" and "NEXT". These captured events are sent to the respective activities "onCommand" function.

The voice-controlled activity is the component which utilizes the concepts of inheritance and encapsulation. The master or parent class implements all the base functionality on a screen or the activity that the designated user (102) might need. The voice-controlled activity of the software application (210) is configured to initialize the voice commander, set up the text to speech, set up the speech to text, API services.

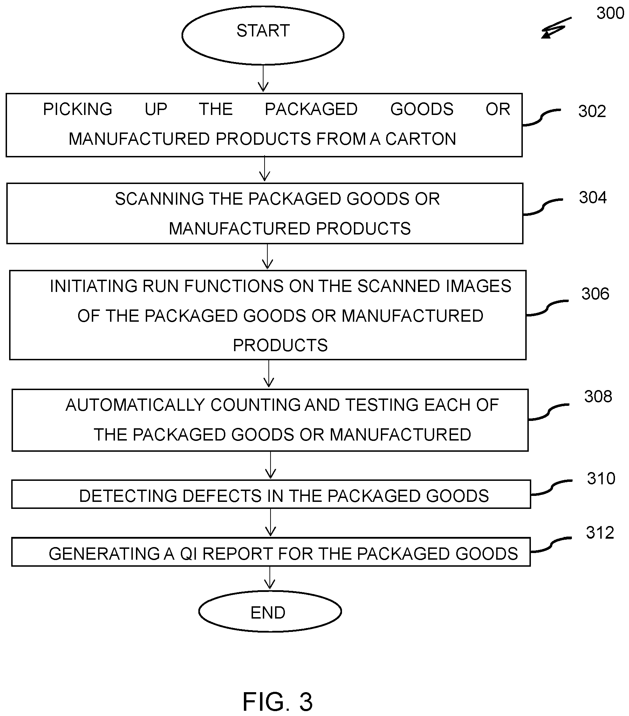

FIG. 3 is a flowchart illustrating a method (300) for performing the quality assurance of the packaged goods or the manufactured products, according to an embodiment. The method (300) starts at step (302) and ends at step (316). The method (300) comprises initially first step of uploading (302), through the setup device (106), the picture order (PO) sheet (130) associated with the at least one packaged good or manufacturing product to be inspected at the inspection location facility (158). The method (300) further comprises second step of receiving (304), through the MR glasses (110), the picture order sheet (130) by the designated user (102). The method (300) further comprises third step of capturing (306), through the AI camera (112), the images of the at least one packaged good or manufacturing product to be inspected from the picture order sheet (130). The method (300) further comprises fourth step of performing (308), through the Al module (118), running of the cloud functions (144) of the cloud network model by the designated user (102) on the captured images, to determine the image characteristics of the at least one packaged good or manufacturing product. The method (300) further comprises fifth step of comparing (310), through the AI module (118) the image characteristics of the at least one packaged good or manufacturing product with image of the at least one packaged good or manufacturing product in the uploaded PO sheet (130). The method (300) further comprises sixth step of detecting (312), through the AI module (118), defects in the packaged goods or manufacturing products, based on comparison of the determined image characteristics of the at least one packaged good or manufacturing product with the image of the at least one packaged good or manufacturing product in the uploaded PO sheet (130). The method (300) further comprises seventh step of generating (314), through the report generation module (120), the quality assurance report based on the detected defects in the at least one packaged good or manufacturing product. The method (300) further comprises eighth step as last step of determining (316), through the QA analysis module (126), a plurality of scores or grades associated with the at least one packaged good or manufacturing product, based on the generated QA report.

In one embodiment, the step of receiving (304), through the MR glasses (110), the picture order sheet (130) by the designated user (102) comprises enabling, through the setup device (106), the designated user (102) to get access to the picture order sheet (130). The step of receiving (304) further comprises displaying, through the MR glasses (110), the picture order sheet (130) to the designated user (102).

In another embodiment, the step of performing (308), through an AI module (118), running of cloud functions (144) of the cloud network model by the designated user (102) on the captured images, to determine image characteristics of the at least one packaged good or manufacturing product further comprises detecting, through the application module (108), location of the designated user (102) and time at which the designated user (102) initiates the QA, while the designated user (102) logs in through the application module (108) to carry out the QA of the packaged goods or manufacturing products.

In another embodiment, the step of determining (316), through the QA analysis module (126), the plurality of scores or grades associated with the at least one packaged good or manufacturing product, based on the generated QA report comprises enabling, through the application module (108), the designated user (102) to carry out the quality assurance of the packaged goods or manufacturing products, by providing different control options to the designated user (102).

In yet another embodiment, the step of generating (314), through the report generation module (120), the quality assurance report based on the detected defects in the at least one packaged good or manufacturing product comprises analyzing, through the QI report analysis module (160), the quality assurance report by comparing the QI report with the image of the at least one packaged good or manufacturing product in the picture order sheet (130). The step of generating (314) further comprises collecting, through the data collector module (162), the data related with the QI of the at least one packaged good or manufacturing product.

In yet another embodiment, the step of determining (316), through the QA analysis module (126), the plurality of scores or grades associated with the at least one packaged good or manufacturing product, based on the generated QA report further comprises classifying, through the QA analysis module (126), the quality of the at least one packaged good or manufacturing product under a specific category. The step of determining (316) further comprises displaying, through the application module (108), the specific category of the at least one packaged good or manufacturing product.

The specific category of the at least one packaged good or manufacturing product comprises classification level of the at least one packaged good or manufacturing product.

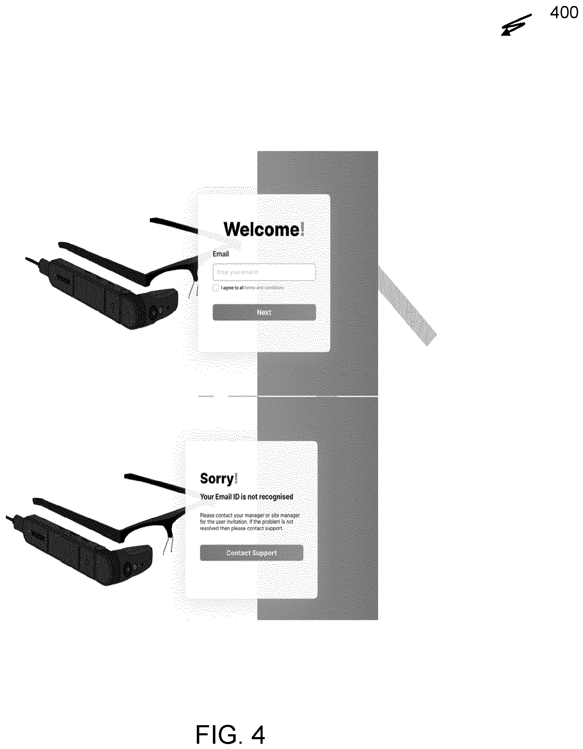

FIG. 4 is a pictorial representation of an application window (400) illustrating verification procedure for the designated user, according to a first embodiment. The application window (400) displays an application interface showing a login page when the designated user (102) logs in through the application module (108) for performing QA. As shown, after the designated user (102) logs in through the application module (108), if the login credentials are correct, the designated user is successfully verified through the application module (108) and access through the application module (108). If the login credentials are incorrect, the application interface displays "Your Email ID is not recognized".

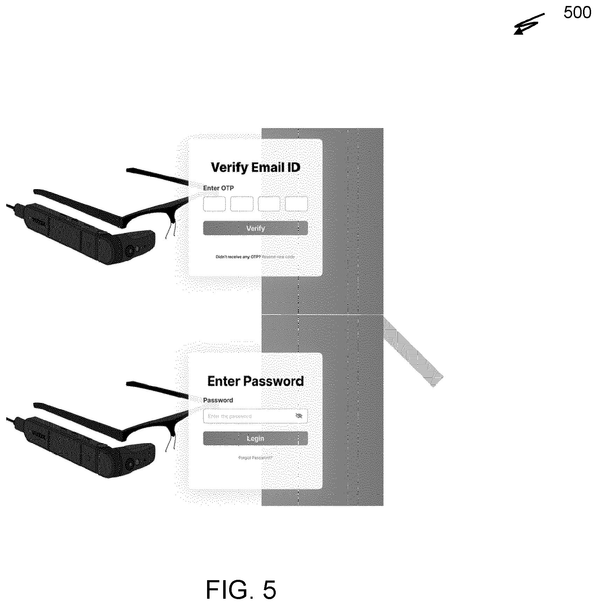

FIG. 5 is a pictorial representation of an application window (500) illustrating the verification procedure for the designated user, according to a second embodiment. The application window (500) displays the application interface showing the login page at the time when the designated user (102) opens the application module (108) for performing QA. As shown, in an instance, when the designated user (102) opens the application module (108), the login credentials are displayed on screen of the user device (104) of the designated user (102). These login credentials are displayed as "Verify Email ID" and "Enter Password".

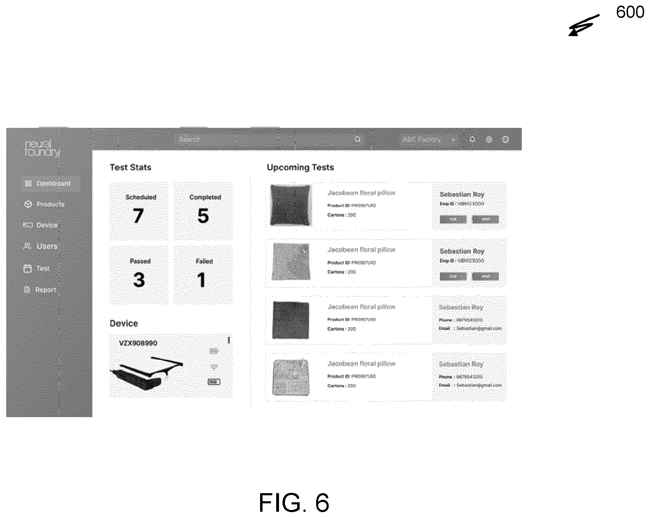

FIG. 6 is a pictorial representation of an application window (600) illustrating QA test statistics, according to a third embodiment. The application window (600) shows number of different tests listed under the test statistics. These different tests are "SCHEDULED TESTS", "COMPLETED TESTS", "PASSED TESTS", and "FAILED TESTS". As shown in FIG. 6, the number of scheduled QA tests are six, the number of completed QA tests are five, the number of passed QA tests are three, and the number of failed QA tests is one. Different upcoming QA tests are also shown which lists the products for which the QA is performed and name of the designated user or quality assurer who is entitled to perform the QA test.

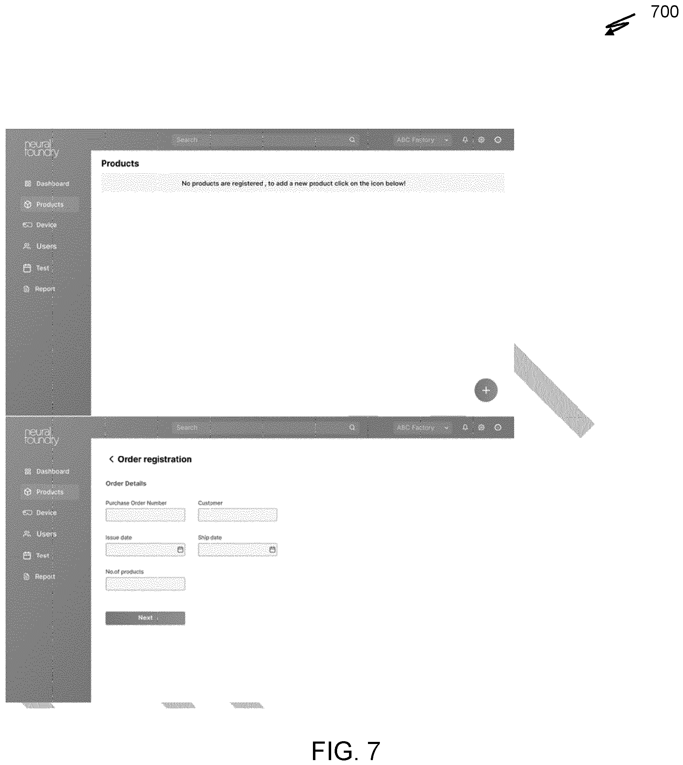

FIG. 7 is a pictorial representation of an application window (700) illustrating product page and order registration page, according to a fourth embodiment. The application window (700) displays the application interface showing that there are no products listed out for which the QA test needs to be conducted. The "Order Registration" page is the page which displays order details to be filled by the designated user. These order details are, but not limited to, purchase order number, customer name, order issue date, order ship date, and number of products.

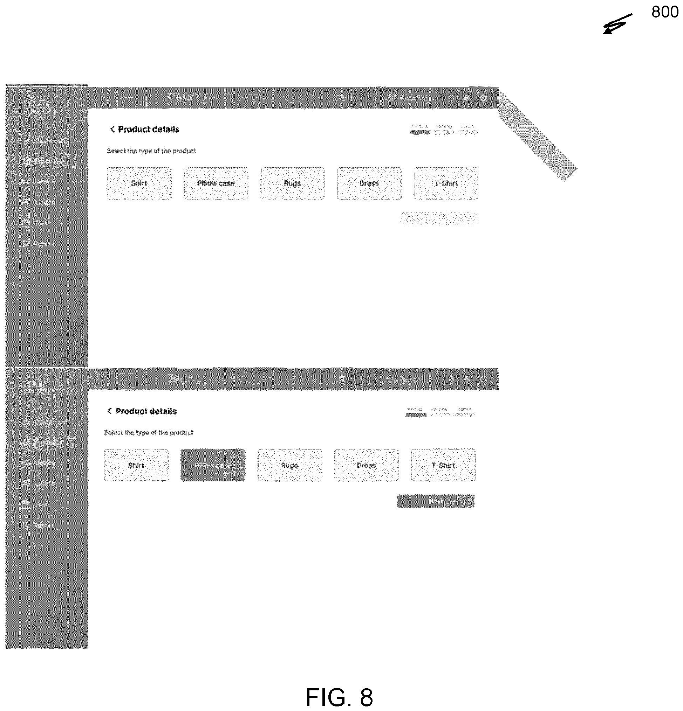

FIG. 8 is a pictorial representation of an application window (800) illustrating the product details, according to a fifth embodiment. The application window (800) displays the application interface showing the product details like "type of the product" to be selected for the QA.

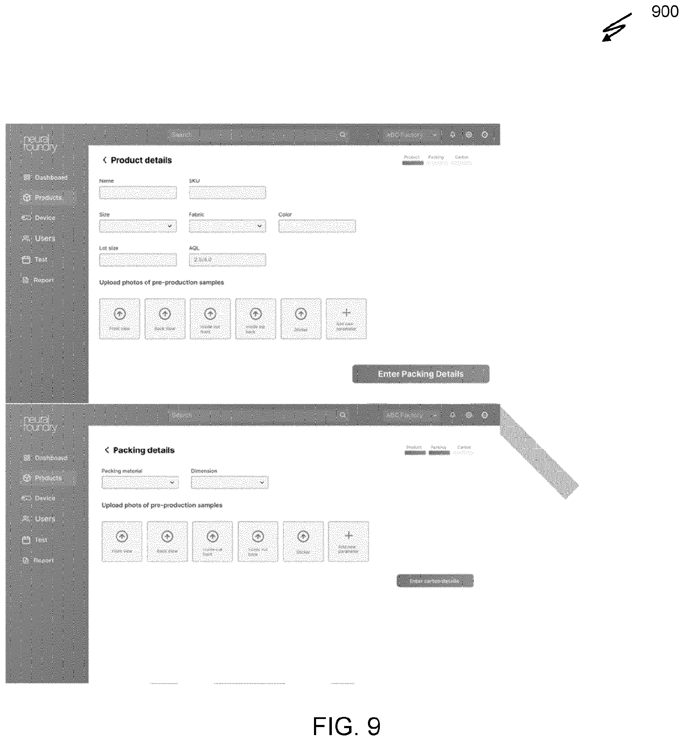

FIG. 9 is a pictorial representation of an application window (900) illustrating the product details, according to a sixth embodiment. The application window (900) displays the application interface showing the product details and the packing details to be filled by the designated user for carrying out the QA. For instance, the application window (800) comprises of the product details like product name, size of the product, fabric used for the product, lot size, and images of the product to be uploaded for performing the QA.

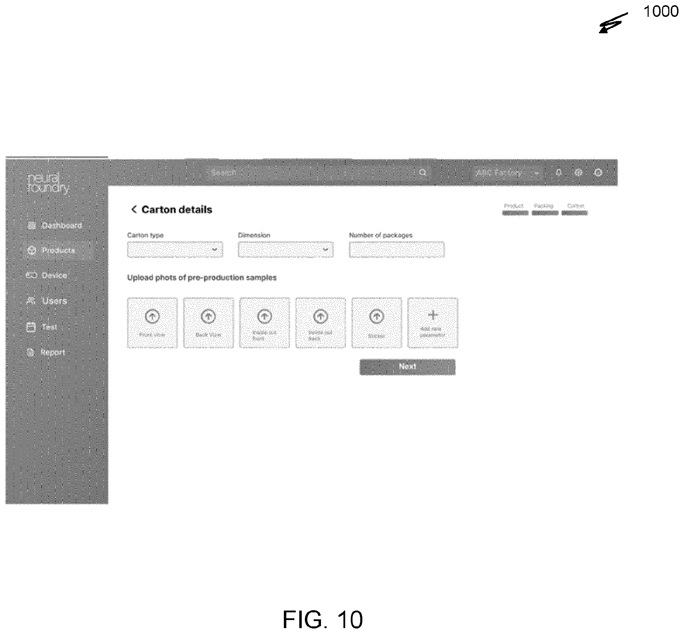

FIG. 10 is a pictorial representation of an application window (1000) illustrating carton details, according to a seventh embodiment, The application window (1000) comprises of the application interface displaying the carton details like carton type, carton dimensions, number of packages, and images of the pre-production sample packed in the carton. The carton type refers to class of the carton in which the product or products are packaged and needs to be inspected.

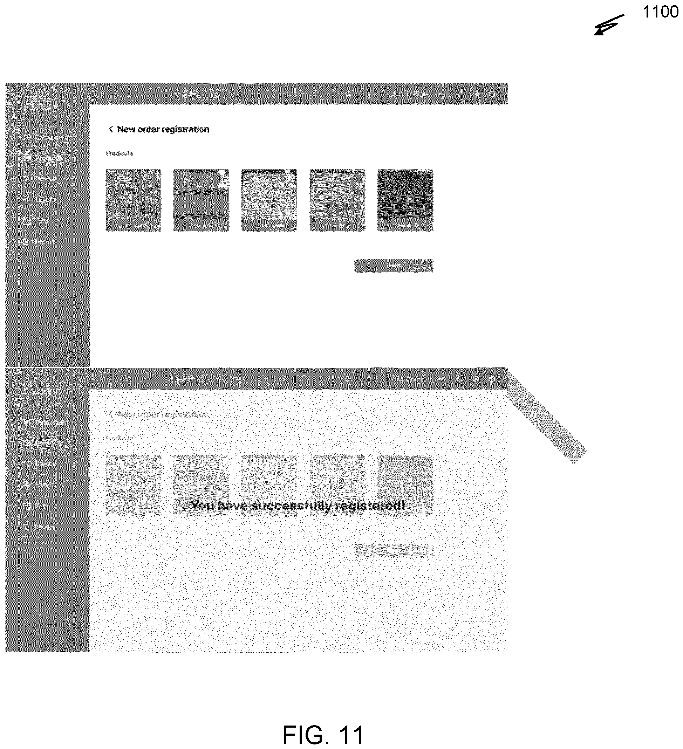

FIG. 11 is a pictorial representation of an application window (1100) illustrating a new order registration, according to an eighth embodiment. The application window (1100) comprises of the application interface showing the information related with new product order registration. The information related with the new product order registration refers to the product or products to be selected for inspection. After selection of a particular product for the inspection, a new order registration page is displayed showing that the designated user (102) has "SUCCESSFULLY REGISTERED".

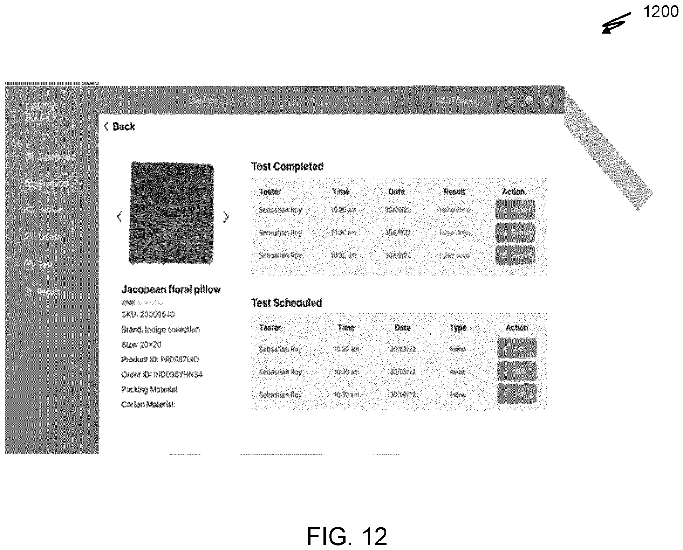

FIG. 12 is a pictorial representation of an application window (1200) illustrating scheduled tests and completed tests, according to a ninth embodiment. The application window (1200) comprises of the application interface showing the particular product for which the details are generated, upon selecting the particular product by the designated user (102) for inspection. For instance, the particular product selected by the designated user (102) for inspection is displayed as "JACOBEAN FLORAL PILLOW". Additionally, the page as displayed by the application window (1200) shows the number of completed tests and the scheduled tests, as well as information alongside the number of completed tests and the number of scheduled tests. For instance, the information alongside the number of completed tests and the scheduled tests is shown which is the QA person or the designated user (102) who completed the QA test and is going to perform the next QA test which is already scheduled, date of the completed QA test or the scheduled QA test, the time of carrying out the completed QA test, the time decided for the designated user to carry out the scheduled test, and updated action/status of the completed QA test or the scheduled QA test.

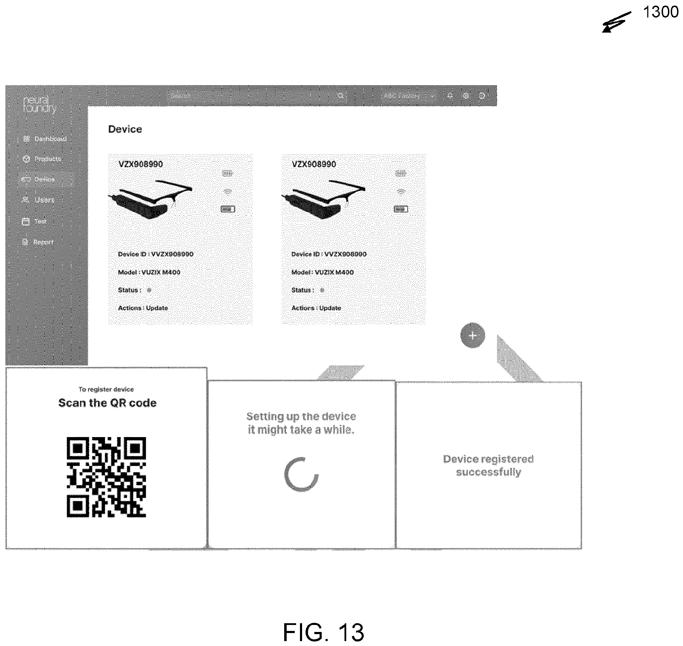

FIG. 13 is a pictorial representation of an application window (1300) illustrating device information, according to a tenth embodiment. The application window (1300) comprises of the application interface configured to display the device information, which is the device used by the designated user (102), i.e., the user device (104), the device used by the admin user, i.e., the setup device (106), model number of the user device (104), model number of the setup device (106).

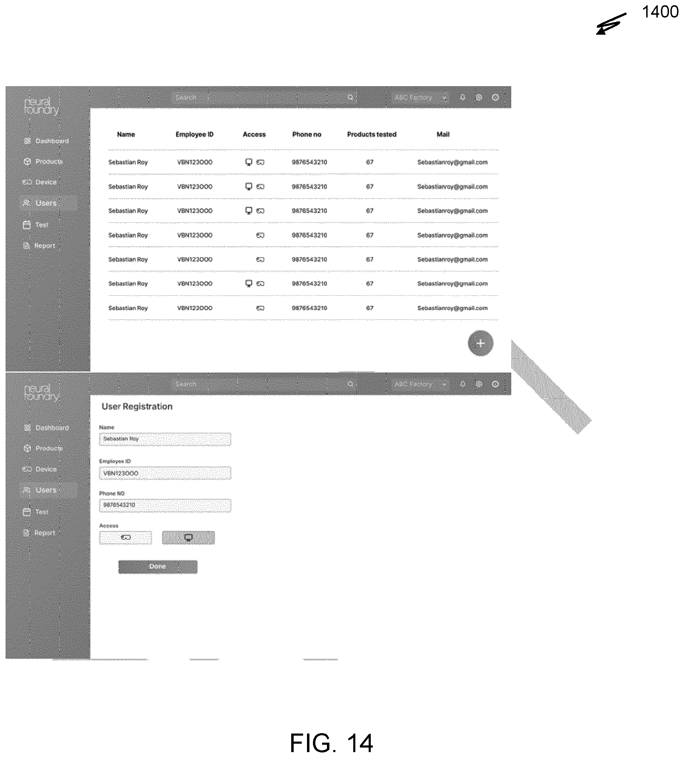

FIG. 14 is a pictorial representation of an application window (1400) illustrating registration details of the designated user (102), according to an eleventh embodiment. The application window (1400) is configured to display information related with the registration details of the designated user (102). The information related with the registration details of the designated user (102) is shown as name of the designated user (102) carrying out the QA test, employee ID of the designated user (102), contact details of the designated user (102), and access options for the designated user (102) to get connected with the admin user.

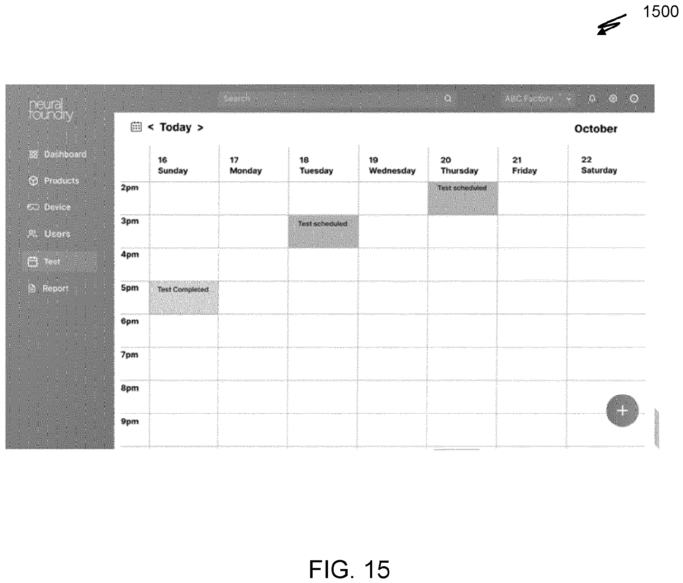

FIG. 15 is a pictorial representation of an application window (1500) illustrating scheduled QA tests and completed QA tests, according to a twelfth embodiment. The application window (1500) comprises of the application interface configured to display the calendar slot in which the QA tests which have been both completed and scheduled are mentioned in the calendar along with the date of the completed QA test and the date of the scheduled QA test.

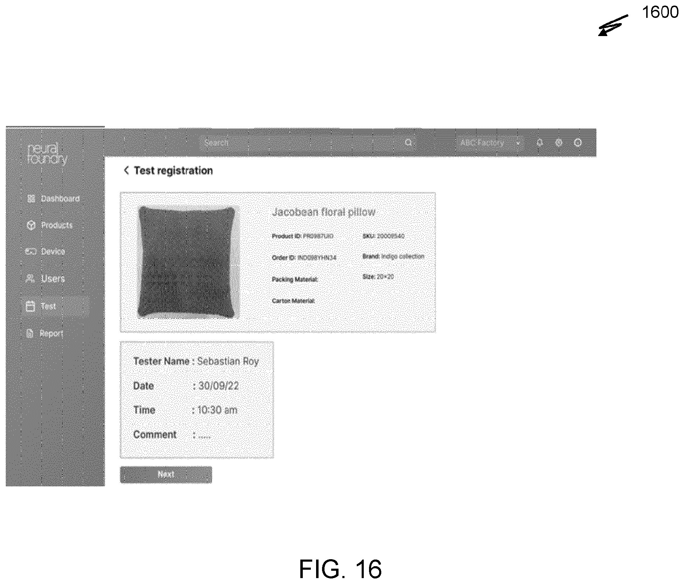

FIG. 16 is a pictorial representation of an application window (1600) illustrating test registration details, according to a thirteenth embodiment. The application window (1600) comprises of the application interface configured to display the information related with the product test like product tester name, product ID, product brand, product size, comment added by the product tester while carrying out QA, and the like.

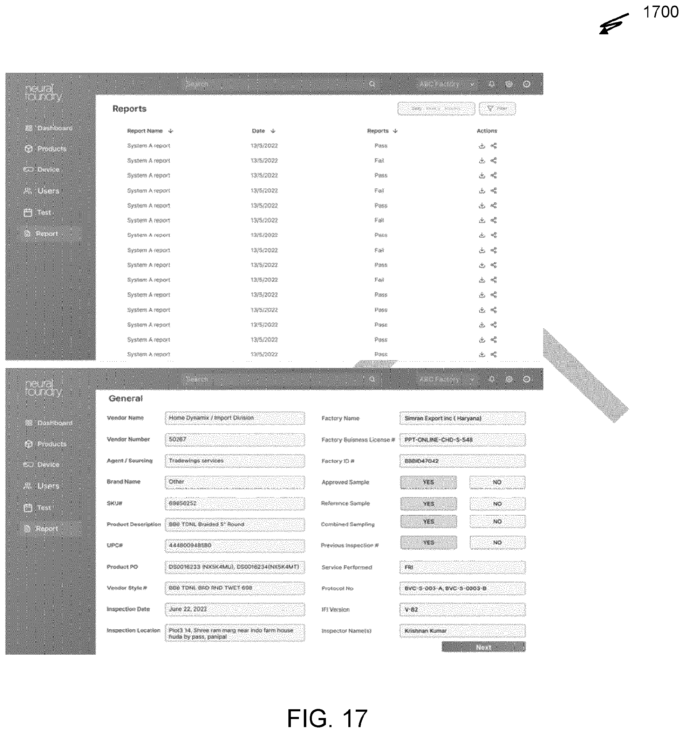

FIG. 17 is a pictorial representation of an application window (1700) illustrating a QA report with status of different QA tests displayed, according to a fourteenth embodiment. The application window (1700) comprises of the application interface configured to display the information displayed in the QA report like vendor name, vendor number, agent/sourcing company, brand, product description, vendor style, inspection date, inspection location, factory name, factory ID, factory business license, service performed, protocol number, inspector name, and the like.

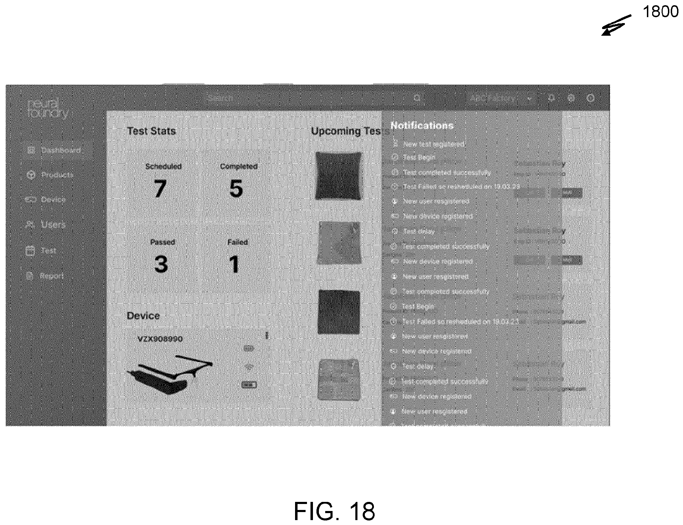

FIG. 18 is a pictorial representation of an application window (1800) illustrating upcoming QA tests along with displayed notifications, according to a fifteenth embodiment. The application window (1800) comprises of the application interface configured to display the information related with the upcoming QA tests and the displayed notifications. The information related with the upcoming QA tests is shown which includes QA tester name, QA tester ID, the product to be inspected, the product ID, total number of products, and the like. The information related with the displayed notifications is the information displaying the options under the notifications. For instance, the options displayed under the notifications are, but not limited to, "NEW TEST REGISTERED", "TEST BEGIN", "TEST COMPLETED SUCCESSFULLY", "NEW USER REGISTERED", "NEW USER REGISTERED", "NEW DEVICE REGISTERED", and the like.

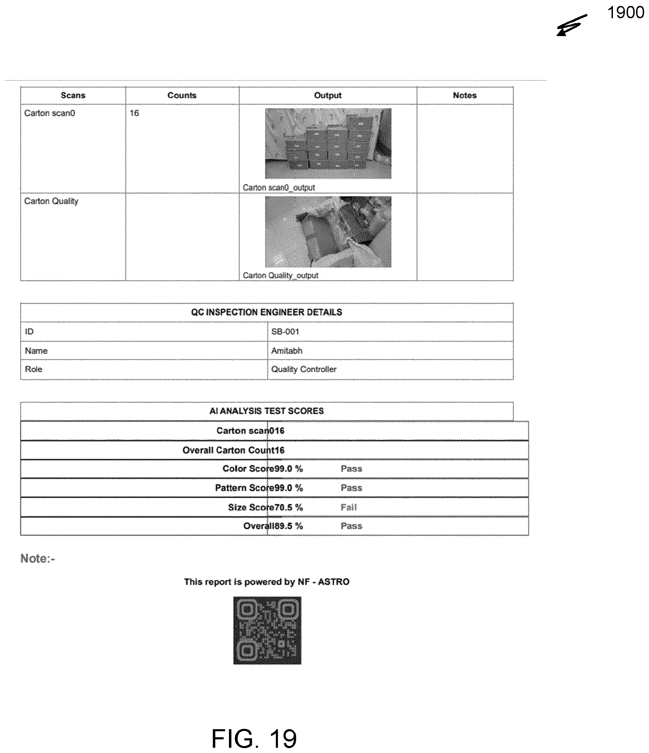

FIG. 19 is a pictorial representation of a QA report (1900) illustrating inspection details and AI analysis test scores, according to an embodiment. The QA report (1900) is generated, through the application module (108), after the quality inspection of the packaged goods or the manufacturing products is completed by the designated user (102). As shown in FIG. 19, the QA report (1900) lists the information related with the quality controller name, quality controller ID, AI analysis test scores, number of counts related to scanning of a particular carton, images of the carton depicting carton quality, and the like. The information related with the AI analysis test scores are, but not limited to, overall carton count, colour score, pattern score, size score, overall score, and final QA status corresponding to each of the scores. For instance, the QA report lists out the overall carton count as 16, the colour score as 99%, the pattern score as 99%, the size score as 70.5%, and the overall score as 89.5%. Additionally, the final QA status corresponding to the colour score, the pattern score, and the overall score is displayed as "PASS", and the final status corresponding to the size score is displayed as "FAIL", which indicates that the packaged good or the manufacturing product after the QA is performed qualifies in terms of the colour, the pattern, and overall characteristics, but fails in terms of size characteristics as there is some defect in the size of the packaged good or the manufacturing product.

The foregoing describes the communication connection method in the embodiments of this application. The following describes the system (100A) in the embodiments of this application. Referring to FIG. 1, an embodiment of the system (100A) in the embodiments of this application includes a memory and a processor. The memory is configured to store a program. The processor is configured to execute the program, to perform the following steps:
uploading (302), by a setup device (106), a picture order (PO) sheet (130) associated with at least one packaged good or manufacturing product to be inspected at an inspection location facility (126);
receiving (304), by Mixed Reality (MR) glasses (110), the picture order sheet (130) by a designated user (102);
capturing (306), by an AI camera (112), images of the at least one packaged good or manufacturing product to be inspected from the picture order sheet (130);
performing (308), by an Al module (118), running of cloud functions (144) of the cloud network model by the designated user (102) on the captured images, to determine image characteristics of the at least one packaged good or manufacturing product;
comparing (310), by the AI module (118), the image characteristics of the at least one packaged good or manufacturing product with image of the at least one packaged good or manufacturing product in the uploaded PO sheet (130);
detecting (312), by the AI module (118), defects in the packaged goods or manufacturing products, based on comparison of the determined image characteristics of the at least one packaged good or manufacturing product with the image of the at least one packaged good or manufacturing product in the uploaded PO sheet (130);
generating (314), by the report generation module (120), a quality assurance report based on the detected defects in the at least one packaged good or manufacturing product; and
determining (316), by a QA analysis module (126), a plurality of scores or grades associated with the at least one packaged good or manufacturing product, based on the generated QA report.
It should be understood that, in the embodiment corresponding to FIG. 1A, procedures executed by the modules of the system are similar to the method procedures described in the embodiment shown in FIG. 3, and details are not described herein.

This embodiment of this application provides a manner of enabling the multiple users to perform the QA of the different manufacturing products, and a specific manner of providing accurate and precise quality inspection results, while performing of the quality assurance of the different manufacturing products, thereby improving flexibility of the solution. The system and method is configured to conduct the quality assurance of the different manufacturing products, through the use of Mixed Reality (MR) technology driven by artificial intelligence (Al). The system is further configured to automatically detect the faults or defects in the different manufacturing products, while performing the quality assurance of the different manufacturing products or packaged goods. The system is further configured to provide grading associated with each of the different manufacturing products or the packaged goods.

The foregoing describes the system in the embodiments of this application from a perspective of a function module. The following aforementioned embodiments describes the system in the embodiments of this application from a perspective of physical hardware. The steps performed by the system in the foregoing embodiment may be based on a system structure shown in FIGS. 1A-1B & 2A.

An embodiment of this application further provides a computer storage medium. The computer storage medium is configured to store a computer instruction used by the system, and the computer instruction includes a program designed for the system to perform the method steps.

All or some of the foregoing embodiments may be implemented by using software, hardware, firmware, or any combination thereof. When software is used to implement the embodiments, the embodiments may be implemented all or partially in a form of a computer program product.

The computer program product includes one or more computer instructions. When the computer program instruction is loaded and executed on a computer, the procedures or the functions in the embodiments of this application are all or partially generated. The computer may be a general-purpose computer, a special-purpose computer, a computer network, or another programmable apparatus. The computer instruction may be stored in a computer readable storage medium or may be transmitted from a computer readable storage medium to another computer readable storage medium. For example, the computer instruction may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

It may be clearly understood by persons skilled in the art that, for a purpose of convenient and brief description, for a detailed working process of the system, the apparatus, and the unit described above, reference may be made to a corresponding process in the foregoing method embodiments. Details are not described herein.

In the several embodiments provided in this application, it should be understood that the disclosed system, apparatus, and method may be implemented in another manner. For example, the described apparatus embodiment is merely an example. For example, a division of the units is merely a logical function division and may be another division during actual implementation. For example, a plurality of units or components may be combined or integrated into another system, or some features may be ignored or may be not performed. In addition, the displayed or discussed mutual couplings, direct couplings, or communication connections may be implemented by using some interfaces. Indirect couplings or communication connections between the apparatuses or the units may be implemented in electronic, mechanical, or another form.

The units described as separate parts may or may not be physically separate, and parts displayed as units may or may not be physical units, which may be located in one position, or may be distributed on a plurality of network units. Some or all of the units may be selected depending on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (English full name: Read-Only Memory, ROM for short in English), a random access memory (English full name: Random Access Memory, RAM for short in English), a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof without departing from spirit and scope of the technical solutions of the embodiments of this application.

## Claims

1. A system (100A) for performing quality assurance of manufacturing products, comprising:
an application module (108), **characterized in that**, the application module (108) comprises:
Mixed Reality (MR) glasses (110), configured to receive, the picture order sheet (130) by a designated user (102);
an AI camera (112), configured to capture, images of the at least one packaged good or manufacturing product to be inspected from the picture order sheet (130);
an AI module (118), configured to perform, running of cloud functions (144) of a cloud network model by the designated user (102) on the captured images, to determine image characteristics of the at least one packaged good or manufacturing product, wherein the AI module (118) is configured to compare the image characteristics of the at least one packaged good or manufacturing product with image of the at least one packaged good or manufacturing product in the uploaded PO sheet (130), and detect defects in the packaged goods or manufacturing products, based on comparison of the determined image characteristics of the at least one packaged good or manufacturing product with the image of the at least one packaged good or manufacturing product in the uploaded PO sheet (130);
a report generation module (120), configured to generate, a QA report based on the detected defects in the at least one packaged good or manufacturing product; and
a QA analysis module (126), configured to determine, a plurality of scores or grades associated with the at least one packaged good or manufacturing product, based on the generated QA report.

2. The system (100A) according to claim 1, wherein the system (100A) comprises a user device (104) is configured to run through a voice command module, to take instructions from an admin user and enable the designated user (102) to provide voice comments (148) to be incorporated in the quality assurance report.

3. The system (100A) according to claims 1 and 2, wherein the system (100A) comprises of a setup device (106) connected with the user device (104), through the cloud network model, and configured to run through a voice command module, and the setup device (126) further comprises:
an admin database (128) configured to store data records related with the list of packaged goods or manufactured products received by the admin user for inspection, the list of packaged goods or manufactured products which have been already inspected by the designated user (102), and the list of packaged goods or manufacturing products in the carton to be picked up by the designated user (102) for testing; and
a web API (132).

4. The system (100A) according to claim 1, wherein the MR glasses (110) are configured to be worn by the designated user (102) to see through packaged goods or manufacturing products clearly, and randomly select any packaged good or manufacturing product from catalogue or scheduled tests option in the application module (106).

5. The system (100A) according to any one of claims 1 to 4, wherein the picture order sheet (130) comprises of a list of packaged goods or manufactured products received by the admin user for inspection, a list of packaged goods or manufactured products which have been already inspected by the designated user (102), and a list of packaged goods or manufacturing products in the carton to be picked up by the designated user (102) for inspection.

6. The system (100A) according to claim 1, wherein the scheduled tests are the tests scheduled by the designated user (102) or users through google calendar, or their own calendar, or third-party calendars.

7. The system (100A) according to claim 1, wherein the application module (106) is configured to enable the designated user (102) to carry out the quality assurance of the packaged goods or manufacturing products, by providing different control options to the designated user (102).

8. The system (100A) according to claim 7, wherein the different control options are, but not limited to, local process (140), SOP (142), cloud functions (144), feedback (146), and the voice comments (148).

9. The system (100A) according to claim 3, wherein the setup device (106) is communicably coupled with the user device (104) to guide the designated user (102), by giving instructions related with performing of the quality assurance of the packaged goods or manufacturing products.

10. The system (100A) according to claim 3, wherein the web API (132) is configured to enable the administrator to select different options for controlling process of the quality assurance to be performed by the designated user (102).

11. The system (100A) according to claim 10, wherein the different options selected are, but not limited to, image database option (150), AQL parameters option (152), activity log option (154), and weights and biases option (156).

12. The system (100A) according to claim 1, wherein the application module (106) comprises of a live QA feature, through which the administrator goes live with the QA, and passes instructions to the designated user (102) for performing the QA of the packaged goods or manufacturing products.

13. The system (100A) according to claim 1, wherein the image characteristics of the packaged goods or manufacturing products are, but not limited to, colour, shape, size, pattern, and product labelling associated with the one or more packaged goods or manufacturing products.

14. The system (100A) as claimed in claim 1, wherein the application module (108) is further configured to detect location of the designated user (102) and time at which the designated user (102) initiates the QA, while the designated user (102) logs in through the application module (108) to carry out the QA of the packaged goods or manufacturing products.

15. A method for performing quality assurance of manufacturing products, the method (300) comprising steps of:
an uploading step (302), to upload, by a setup device (106), a picture order (PO) sheet (130) associated with at least one packaged good or manufacturing product to be inspected at an inspection location facility (126);
a receiving step (304), to receive, by MR glasses (110), the picture order sheet (130) by a designated user (102);
a capturing step (306), to capture, by an AI camera (112), images of the at least one packaged good or manufacturing product to be inspected from the picture order sheet (130);
a performing step (308), to perform, by an AI module (118), running of cloud functions (144) of the cloud network model by the designated user (102) on the captured images, to determine image characteristics of the at least one packaged good or manufacturing product;
a comparing step (310), to compare, by the AI module (118), the image characteristics of the at least one packaged good or manufacturing product with image of the at least one packaged good or manufacturing product in the uploaded PO sheet (130);
a detecting step (312), to detect by the AI module (118), defects in the packaged goods or manufacturing products, based on comparison of the determined image characteristics of the at least one packaged good or manufacturing product with the image of the at least one packaged good or manufacturing product in the uploaded PO sheet (130);
a generating step (314), to generate, by a report generation module (120), a quality assurance report based on the detected defects in the at least one packaged good or manufacturing product; and
a determining step (316), to determine, by a QA analysis module (126), a plurality of scores or grades associated with the at least one packaged good or manufacturing product, based on the generated QA report.

16. The method (300) as claimed in claim 15, wherein the step of receiving (304), through MR glasses (110), the picture order sheet (130) by the designated user (102) comprises:
enabling, through a setup device (106), the designated user (102) to get access to the picture order sheet (130); and
displaying, through the MR glasses (110), the picture order sheet (130) to the designated user (102).

17. The method (300) as claimed in claim 15, wherein the step of determining (316), through the QA analysis module (126), the plurality of scores or grades associated with the at least one packaged good or manufacturing product, based on the generated QA report comprises:
enabling, through the application module (112), the designated user (102) to carry out the quality assurance of the packaged goods or manufacturing products, by providing different control options to the designated user (102).

18. The method (300) as claimed in claim 15, wherein the step of generating (314), through the report generation module (120), the quality assurance report based on the detected defects in the at least one packaged good or manufacturing product comprises:
analyzing, through a QA report analysis module (160), the quality assurance report by comparing the QA report with the image of the at least one packaged good or manufacturing product in the picture order sheet (130); and
collecting, through a data collector module (162), data related with the QA of the at least one packaged good or manufacturing product.

19. The method (300) as claimed in claim 17, wherein the different control options are, but not limited to, local process (140), SOP (142), cloud functions (144), feedback (146), and the voice comments (148).

20. The method (300) as claimed in claim 15, wherein the step of determining (316), through the QA analysis module (126), the plurality of scores or grades associated with the at least one packaged good or manufacturing product, based on the generated QA report further comprises:
classifying, through the QA analysis module (126), the quality of the at least one packaged good or manufacturing product under a specific category; and
displaying, through the application module (108), the specific category of the at least one packaged good or manufacturing product.

21. The method (300) as claimed in claim 20, wherein the specific category of the at least one packaged good or manufacturing product, is but not limited to, a classification level of the at least one packaged good or manufacturing product.

22. The method (300) as claimed in claim 15, wherein the picture order sheet (130) comprises of a list of packaged goods or manufactured products received by the admin user for inspection, a list of packaged goods or manufactured products which have been already inspected by the designated user (102), and a list of packaged goods or manufacturing products in the carton to be picked up by the designated user (102) for inspection.

23. The method (300) as claimed in claim 15, wherein the step of performing (308), through an AI module (118), running of cloud functions (144) of the cloud network model by the designated user (102) on the captured images, to determine image characteristics of the at least one packaged good or manufacturing product further comprises:
detecting, through the application module (108), location of the designated user (102) and time at which the designated user (102) initiates the QA, while the designated user (102) logs in through the application module (108) to carry out the QA of the packaged goods or manufacturing products.

24. A system (100A), comprising a transceiver, a processor, and a memory, wherein the memory is configured to store a program; and
the processor is configured to execute the program, to perform the following steps:
uploading (302), by a setup device (106), a picture order (PO) sheet (130) associated with at least one packaged good or manufacturing product to be inspected at an inspection location facility (158);
receiving (304), by MR glasses (110), the picture order sheet (130) by a designated user (102);
capturing (306), by an AI camera (112), images of the at least one packaged good or manufacturing product to be inspected from the picture order sheet (130);
performing (308), by an AI module (118), running of cloud functions (144) of the cloud network model by the designated user (102) on the captured images, to determine image characteristics of the at least one packaged good or manufacturing product;
comparing (310), by the AI module (118), the image characteristics of the at least one packaged good or manufacturing product with image of the at least one packaged good or manufacturing product in the uploaded PO sheet (130);
detecting (312), by the AI module (118), defects in the packaged goods or manufacturing products, based on comparison of the determined image characteristics of the at least one packaged good or manufacturing product with the image of the at least one packaged good or manufacturing product in the uploaded PO sheet (130);
generating (314), by the report generation module (120), a quality assurance report based on the detected defects in the at least one packaged good or manufacturing product; and
determining (316), by a QA analysis module (126), a plurality of scores or grades associated with the at least one packaged good or manufacturing product, based on the generated QA report.

25. A computer readable storage medium, comprising an instruction, wherein when the instruction is run on a computer, the computer is enabled to perform the method according to claims 15 to 20 and 23.
